# EUROPÄISCHE PATENTSCHRIFT

(11) **EP 4 261 073 B1**
(45) Veröffentlichungstag und Bekanntmachung des Hinweises auf die Patenterteilung: **05.08.2026**
(21) Anmeldenummer: 23162682.1
(22) Anmeldetag: 17.03.2023
(51) Int. Cl.: B60L 1/00, B60L 1/02, B60L 58/18

(54) **TRAKTIONSSYSTEM FÜR EIN FAHRZEUG MIT MEHREREN ELEKTRISCHEN ENERGIESPEICHERN UND EINEM HILFSBETRIEBEVERBRAUCHER**
TRACTION SYSTEM FOR A VEHICLE WITH A PLURALITY OF ELECTRICAL ENERGY STORES AND AN AUXILIARY OPERATING CONSUMER
SYSTÈME DE TRACTION POUR UN VÉHICULE DOTÉ DE PLUSIEURS ACCUMULATEURS D'ÉNERGIE ÉLECTRIQUE ET D'UN CONSOMMATEUR D'OPÉRATION AUXILIAIRE

(30) Priorität: 29.03.2022 DE 102022203072
(43) Veröffentlichungstag der Anmeldung: 18.10.2023
(73) Patentinhaber: Siemens Mobility GmbH, 80997 München (DE)
(72) Erfinder: Ruppert, Swen, 91096 Möhrendorf (DE)
(74) Vertreter: Siemens Patent Attorneys

(56) Entgegenhaltungen:
- DE-A1- 10 053 584
- DE-A1- 102014 217 219
- DE-A1- 102015 007 629
- DE-B3- 10 348 162
- US-A1- 2009 015 973
- US-A1- 2017 036 545
- US-A1- 2017 240 051

## Beschreibung

Die Erfindung betrifft ein Traktionssystem für ein Fahrzeug, insbesondere für ein Schienenfahrzeug, mit zumindest einem ersten und einem zweiten elektrischen Energiespeicher, wobei die Energiespeicher an mindestens einen Motor zum Antrieb des Fahrzeugs angeschlossen sind.

Schienenfahrzeuge werden überwiegend mit elektrischer Energie aus der Oberleitung versorgt. Da dies für manche Strecken nicht möglich ist, kann hier ein Dieselantrieb zum Einsatz kommen. Dies ist jedoch aufgrund der Schadstoff- und Partikelemission unerwünscht, so dass stattdessen Traktionsbatterien zum Einsatz kommen. Hybride Fahrzeug-Traktionssysteme z.B. für Bahnen ermöglichen die Nutzung elektrischer Energie aus der Oberleitung oder alternativ aus einer Traktionsbatterie.

Außer dem Motor weisen Fahrzeuge üblicherweise auch Hilfsbetriebeverbraucher auf, wie z.B. Beleuchtungseinrichtungen, Klima/Heizungs-Anlagen, elektronische Systeme, Anlagen zur Kühlung von Komponenten, oder Komfortverbraucher wie Steckdosen. Es handelt sich hierbei also um Verbraucher, die im Gegensatz zum Motor nicht direkt dem Antrieb des Fahrzeugs dienen, sondern diesen lediglich unterstützen oder gänzlich von der Traktion unabhängige Funktionen erfüllen. Auch diese Hilfsbetriebeverbraucher sollen von den Traktionsbatterien mit elektrischer Energie versorgt werden.

Das Dokument DE 10 2014 217219 A1 beschreibt ein Fahrzeug, z.B. ein Schienenfahrzeug, mit einem fahrzeuginternen elektrischen Netz. Dieses umfasst elektrische Antriebe, Energiespeicher, sowie ein Bordnetz.

Der Erfindung liegt die Aufgabe zugrunde, ein Traktionssystem für ein Fahrzeug aufzuzeigen, welches mehrere elektrische Energiespeicher und einen oder mehrere Hilfsbetriebeverbraucher aufweist.

Diese Aufgabe wird durch ein Traktionssystem mit den Merkmalen des Anspruchs 1 gelöst. Ferner sind Gegenstand der Erfindung ein entsprechendes Verfahren und ein Fahrzeug. Vorteilhafte Ausgestaltungen und Weiterbildungen sind Gegenstand von Unteransprüchen.

Das Traktionssystem für ein Fahrzeug umfasst zumindest einen ersten elektrischen Energiespeicher und einen zweiten elektrischen Energiespeicher, wobei der erste elektrische Energiespeicher und der zweite elektrische Energiespeicher über jeweils einen Gleichspannungswandler an mindestens einen Motor zum Antrieb des Fahrzeugs angeschlossen sind. Ferner sind der erste elektrische Energiespeicher und der zweite elektrische Energiespeicher nicht über den jeweiligen Gleichspannungswandler an zumindest einem weiteren Verbraucher derart über Dioden angeschlossen, dass der zumindest eine weitere Verbraucher von dem elektrischen Energiespeicher versorgt wird, dessen Spannung höher ist.

Bei den elektrischen Energiespeichern handelt es sich vorzugsweise um Akkumulatoren, also aufladbare Batterien, die Energie in elektrochemischer Form speichern. Besonders verbreitet und geeignet sind Akkumulatoren basierend auf einer Lithium-Ionen Technologie; es eignen sich jedoch auch andersartige aufladbare Speicher für elektrische Energie. Die elektrischen Energiespeicher erfüllen eine mehrfache Funktion: sie sind für die Energieversorgung sowohl des Motors bzw. der Motoren zuständig, als auch eines oder mehrerer weiterer Verbraucher.

Jeder der beiden Energiespeicher ist mit einem Gleichspannungswandler verbunden. Zu jedem elektrischen Energiespeicher gehört also ein Batteriesteller, welcher sich zwischen dem jeweiligen Energiespeicher und dem oder den Motoren befindet. Dadurch, dass die beiden Energiespeicher an den oder die Motoren über diese Gleichspannungswandler angeschlossen sind, befindet sich der Motor oder die Motoren auf einem anderen Spannungsniveau als die Energiespeicher. Im Gegensatz hierzu findet der Anschluss der beiden Energiespeicher an den zumindest einen weiteren Verbraucher nicht über die Gleichspannungswandler statt. Dies ermöglicht, dass sich der zumindest eine weitere Verbraucher nicht auf dem Spannungsniveau des oder der Motoren befindet.

Jeder elektrische Energiespeicher weist eine bestimmte Leerlaufspannung auf, wobei diese Spannung i.d.R. vom Ladezustand des elektrischen Energiespeichers abhängt. Der erste und der zweite elektrische Energiespeicher können also deshalb eine voneinander unterschiedliche Spannung aufweisen, weil sich ihre Ladezustände voneinander unterscheiden. Dieser Unterschied kann insbesondere durch eine unterschiedlich starke Beanspruchung der beiden elektrischen Energiespeicher durch den oder die weiteren Verbraucher zustande kommen, bei zwischen den Energiespeichern gleichverteilter Beanspruchung zu Zwecken der Fahrzeugtraktion.

Erstrebenswert ist der Zustand gleicher oder ähnlicher Aufladung der elektrischen Energiespeicher, was einem Angleichen ihrer Spannungsniveaus entspricht. Hierzu kommt eine Diodenschaltung zum Einsatz, welche bewirkt, dass der zumindest eine weitere Verbraucher von dem elektrischen Energiespeicher versorgt wird, dessen Spannung höher ist. Dies kann vollständig der Fall sein, d.h. der Energiespeicher mit der höheren Spannung ist alleine für das Zur-Verfügung-Stellen von elektrischer Energie an den zumindest einen weiteren Verbraucher zuständig, während der andere Energiespeicher hierzu keinen Beitrag leistet. Es ist jedoch auch möglich, insbesondere bei nur leicht unterschiedlichen Spannungsniveaus der Energiespeicher, dass der elektrische Energiespeicher mit der höheren Spannung lediglich überwiegend für das Zur-Verfügung-Stellen von elektrischer Energie an den zumindest einen weiteren Verbraucher zuständig ist, während der andere Energiespeicher hierzu einen kleineren Beitrag leistet.

Da sich die Spannungen der elektrischen Energiespeicher mit der Zeit ändern, kann sich im Zeitverlauf auch ändern, welcher elektrische Energiespeicher ganz oder überwiegend die Versorgung des zumindest einen weiteren Verbrauchers übernimmt. Dies erfolgt automatisch über die Diodenschaltung, ohne dass es hierzu einer Messung und/oder eines Steuereingriffs bedarf.

Vorzugsweise existieren die folgenden drei Situationen:
- Die elektrischen Energiespeicher weisen leicht unterschiedliche Spannungen auf. Dann wird der zumindest eine weitere Verbraucher von beiden Energiespeichern versorgt, wobei vorzugsweise überwiegend der elektrische Energiespeicher mit der höheren Spannung die Versorgung übernimmt.
   Die elektrischen Energiespeicher weisen dann leicht unterschiedliche Spannungen auf, wenn ihre Leerlaufspannungen nicht stärker voneinander abweichen als der durch den Strom des weiteren Verbrauchers verursachte Spannungsabfall am Innenwiderstand des Energiespeichers, der typischerweise kleiner 20V beträgt.
- Die elektrischen Energiespeicher weisen stärker oder deutlich unterschiedliche Spannungen auf. Dann wird der zumindest eine weitere Verbraucher nur von dem elektrischen Energiespeicher versorgt, dessen Spannung höher ist.
- Die elektrischen Energiespeicher weisen die gleichen Spannungen auf. Dann wird der zumindest eine weitere Verbraucher von beiden Energiespeichern in gleichem Ausmaß versorgt.

Wie bereits erläutert, bewirkt die Diodenschaltung, dass der Wechsel zwischen diesen verschiedenen Versorgungssituationen automatisch mit der Änderung der Spannungsniveaus erfolgt.

In Weiterbildung der Erfindung sind der erste elektrische Energiespeicher und der zweite elektrische Energiespeicher an den zumindest einen weiteren Verbraucher derart über Dioden angeschlossen, dass kein Stromfluss zwischen den elektrischen Energiespeichern möglich ist. Die Diodenschaltung gibt also - abhängig von den aktuellen Spannungsniveaus der Energiespeicher - einen Stromfluss zwischen den elektrischen Energiespeichern und dem zumindest einen weiteren Verbraucher frei, aber grundsätzlich keine Ausgleichsströme zwischen den elektrischen Energiespeichern.

In Ausgestaltung der Erfindung ist die Diodenschaltung derart gebildet, dass in einer ersten Masche der erste elektrische Energiespeicher, eine erste Diode und der zumindest eine weitere Verbraucher angeordnet sind, und in einer zweiten Masche der zweite elektrische Energiespeicher, eine zweite Diode und der zumindest eine weitere Verbraucher. Die Einbaurichtung der Dioden ist hierbei so, dass bei deutlich unterschiedlichen Spannungsniveaus der elektrischen Energiespeicher die Diode in der Masche mit dem elektrischen Energiespeicher mit der höheren Spannung einen Stromfluss von diesem elektrischen Energiespeicher zu dem zumindest einen weiteren Verbraucher durchlässt, während die Diode in der anderen Masche einen Stromfluss von dem elektrischen Energiespeicher in dieser anderen Masche zu dem zumindest einen weiteren Verbraucher sperrt.

In Ausgestaltung der Erfindung sind der erste elektrische Energiespeicher und der zweite elektrische Energiespeicher an den mindestens einen Motor über den jeweils einen Gleichspannungswandler und zumindest einen Gleichstromzwischenkreis, vorzugsweise einen gemeinsamen Gleichstromzwischenkreis, angeschlossen, wobei die Spannung der elektrischen Energiespeicher im Niederspannungsbereich und die Spannung des Gleichstromzwischenkreises im Mittelspannungsbereich liegt. Zu jedem elektrischen Energiespeicher gehört also ein Batteriesteller, welcher sich zwischen dem jeweiligen Energiespeicher und einem Gleichstromzwischenkreis befindet. Als Niederspannung (LV, Low Voltage) bezeichnet man hierbei Gleichspannungen bis 1500 Volt, Mittelspannung (MV, Medium Voltage) sind größer als 1000 Volt. Wegen der hohen erforderlichen Leistungen verwenden batteriebasierte Traktionssysteme üblicherweise Spannungen im Mittelspannungsbereich. Dies macht es erforderlich, dass das üblicherweise im Niederspannungsbereich liegende Batteriespannungsniveau an den Zwischenkreis des Traktionssystems angepasst werden muss.

Bei dem Verfahren zum Betreiben eines Traktionssystems für ein Fahrzeug mit zumindest einem ersten elektrischen Energiespeicher und einem zweiten elektrischen Energiespeicher wird zumindest ein Motor zum Antrieb des Fahrzeugs gleichzeitig von dem ersten elektrischen Energiespeicher und dem zweiten elektrischen Energiespeicher über jeweils einen Gleichspannungswandler versorgt. Der erste elektrische Energiespeicher und der zweite elektrische Energiespeicher sind an zumindest einen weiteren Verbraucher nicht über den jeweiligen Gleichspannungswandler derart über Dioden angeschlossen, dass der zumindest eine weitere Verbraucher von dem elektrischen Energiespeicher versorgt wird, dessen Spannung höher ist.

Das Verfahren kann ausgestaltet sein zur Durchführung aller oder mancher der in Bezug auf das Traktionssystem erläuterten Merkmale. Insbesondere ist es vorteilhaft, wenn eine Energieabgabe der elektrischen Energiespeicher an den zumindest einen Motor und ein Aufladen der elektrischen Energiespeicher über den jeweiligen Gleichspannungswandler erfolgt, und die Energieabgabe und das Aufladen der elektrischen Energiespeicher über die Gleichspannungswandler so gesteuert wird, dass die elektrischen Energiespeicher die gleiche Spannung aufweisen. Dieses Vorgehen unterstützt die Angleichung der Spannungsniveaus der elektrischen Energiespeicher durch die Diodenschaltung. Das Ziel der Vorgehensweise ist es, dass die Versorgung des zumindest einen weiteren Verbrauchers möglichst symmetrisch erfolgt.

Im Folgenden wird die Erfindung anhand eines Ausführungsbeispiels näher erläutert. Dabei zeigen:
Figur 1: ein Schienenfahrzeug,
Figur 2: einen Ausschnitt aus einem Fahrzeug-Traktionssystem nach dem Stand der Technik,
Figur 3: eine erste Darstellung eines Ausschnitts aus einem verbesserten Fahrzeug-Traktionssystem,
Figur 4: eine zweite Darstellung eines Ausschnitts aus einem verbesserten Fahrzeug-Traktionssystem.

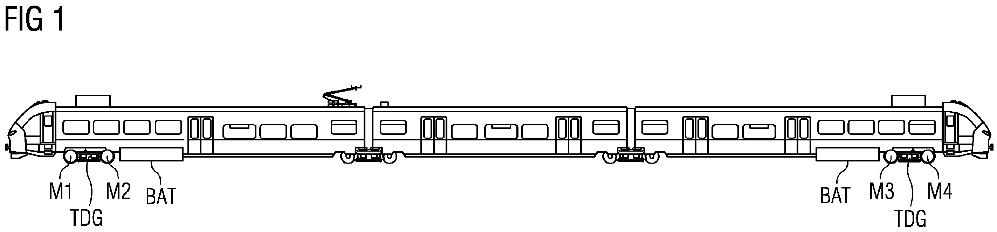

Figur 1 zeigt ein Schienenfahrzeug mit zwei mechanischen Traktionsantriebsteilen in Form von Triebdrehgestellen TDG.

Am vorderen Triebdrehgestell TDG befinden sich die beiden Motoren M1 und M2, am hinteren Triebdrehgestell TDG die beiden Motoren M3 und M4, welche dem Antrieb der jeweiligen Radsätze dienen. Das Schienenfahrzeug, z.B. eine Bahn, verfügt über ein hybrides Fahrzeug-Traktionssystem. Dies bedeutet, dass das Schienenfahrzeug einerseits über Strom von der Oberleitung mit elektrischer Energie versorgt werden kann, und andererseits von Traktionsbatterien. Hierzu ist das Schienenfahrzeug mit den Traktionsbatteriesystemen BAT ausgestattet. Die Verwendung von batterieangetriebenen Zügen ist vorteilhaft, da sie Dieselfahrzeuge ersetzen können, welche ansonsten auf nicht elektrifizierten Strecken zum Einsatz kommen. Hierdurch wird der unerwünschte Schadstoffausstoß von Dieselfahrzeugen vermieden. Die elektrische Traktion mittels Batterie weist ähnliche Eigenschaften wie die Dieseltraktion auf, nämlich eine hohe Zugkraft bei eher geringer Leistung. Dies entspricht der Möglichkeit einer hohen Beschleunigung und dem Fahren mit nicht allzu hoher konstanter Geschwindigkeit nach Abschluss der Beschleunigung. Diese Anforderung wird an viele Regionalzüge gestellt, welche entlegene nicht elektrifizierte Strecken befahren, auf welchen keine hohen Geschwindigkeiten möglich sind.

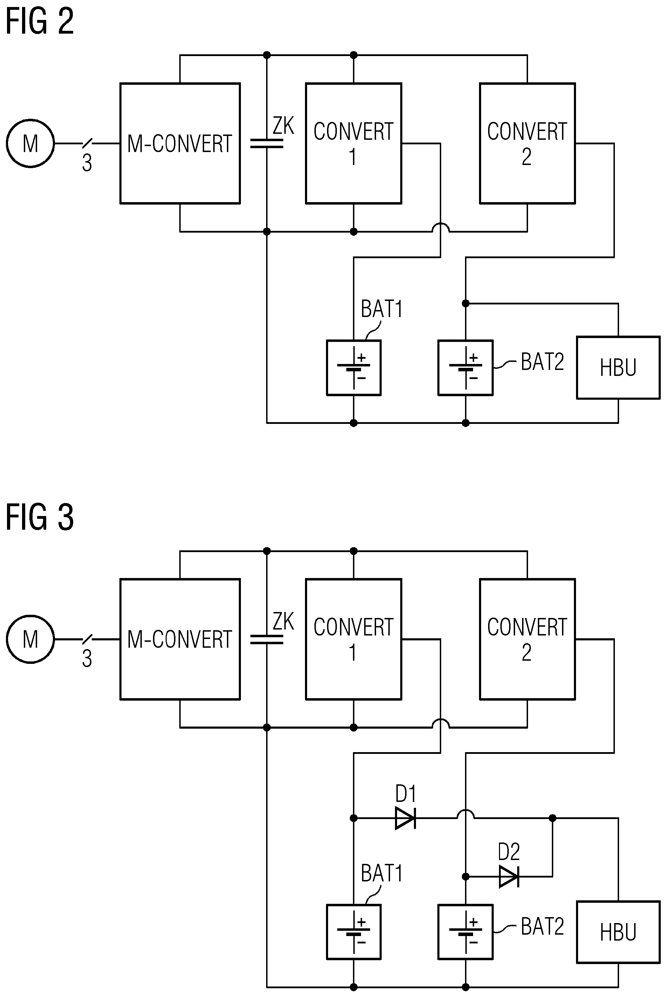

In dem in Figur 2 dargestellten Ausschnitt aus dem Fahrzeug-Traktionssystem ist zu sehen, dass die Traktionsbatteriesysteme BAT aus mehreren parallelgeschalteten Batterieblöcken BAT1 und BAT2 bestehen. Hierbei hat jeder der Batterieblöcke BAT1 und BAT2 üblicherweise ein Spannungsniveau von kleiner als 1000V. Dies wird durch eine Reihenschaltung von 2-3 V Zellen erreicht. Diese Einzelzellen, typischerweise 200-400 Stück, werden also so gestackt, dass die Ausgangsspannung der hierdurch gebildeten Batteriestränge oder -branches BAT 1 und BAT 2 jeweils im LV (Low Voltage-Bereich liegt. Da der LV-Normbereich, welcher bis maximal 1.5 kV reicht, sich aus Service- und Sicherheitszwecken - dies korreliert z.B. mit der Anforderung an das für Service und Reparatur benötigte Fachpersonal und die erforderliche Isolationsklasse - für Batterien eignet, wird diese Dimensionierung der Traktionsbatterien bevorzugt.

Zur Erhöhung der Übersichtlichkeit sind in den Figuren nur die beiden Batterieblöcke BAT1 und BAT2 dargestellt. Es versteht sich, dass mehr als zwei parallel geschaltete Batterieblöcke zum Einsatz kommen können. Die folgenden Ausführungen sind entsprechend auf eine größere Anzahl an Batterieblöcke anwendbar.

Üblicherweise werden für die Batterieblöcke BAT 1 und BAT 2 Lithium-Ionen-Akkumulatoren verwendet. Die Erfindung ist aber nicht auf diese Batterietypen beschränkt. Ferner können anstelle von Batterien auch andersartige Energiespeicher zum Einsatz kommen; in Betracht kommen z.B. Hochleistungskondensatoren.

Das Fahrzeug-Traktionssystem der Figur 2, welches sich insbesondere für Bahnen, aber auch für größere Fahrzeuge wie spezielle Trucks, z.B. im Bergbau eingesetzte Kipplader eignet, weist einen DC-Zwischenkreis ZK auf, dessen Spannung z.B. 2 kV beträgt. Diese gegenüber der Spannung der Batterieblöcke BAT1 und BAT2 höhere Spannung ist erforderlich, um wegen den am Verbraucher geforderten hohen Leistungen keine allzu hohen Ströme auftreten zu lassen. Daher wird das Batteriespannungsniveau, welches wie beschrieben im Niederspannungsbereich liegt, an den Zwischenkreis ZK des Fahrzeug-Traktionssystems angepasst. Dieses Hochstellen der von den Batterieblöcken BAT1 bzw. BAT2 zur Verfügung gestellten Gleichspannung erfolgt mittels der DCDC-Wandler CONVERT1 und CONVERT2. Bei den DCDC-Wandlern CONVERT1 und CONVERT2 handelt es sich um Hoch-Tiefsetz-Steller. An den DC-Zwischenkreis ZK ist ein Motorumrichter M-CONV, wie z.B. ein PWR (Pulswechselrichter), angeschlossen, welcher die von dem Verbraucher in Form des Motors benötigte dreiphasige Wechselspannung zur Verfügung stellt. Während im Fahrzeug-Traktionssystem der Figur 2 nur ein Motor M gezeigt ist, können abweichend hiervon auch mehrere Motoren von dem Zwischenkreis ZK versorgt werden.

Die beiden einzelnen Batterieblöcke BAT1 und BAT2, die Spannungen im Low Voltage Bereich haben, werden in dem in Figur 2 gezeigten System also über Hoch-Tiefsetz-Steller an ein Spannungssystem im Medium Voltage Bereich in Form des Zwischenkreises ZK angeschlossen. Hierbei steht pro Batterieblock BAT1 bzw. BAT2 in eigener Hoch-Tiefsetz-Steller zur Verfügung: so ist der Batterieblock BAT1 über den Wandler CONVERT1 an den Zwischenkreis ZK angebunden, und der Batterieblock BAT2 über den Wandler CONVERT2. Über die Wandler CONVERT1 und CONVERT2 versorgen die Batterieblöcke BAT1 und BAT2 den Motor M mit elektrischer Energie. Ebenso werden die Batterieblöcke BAT1 und BAT2 über die Wandler CONVERT1 und CONVERT2 wieder aufgeladen. Diese Aufladung erfolgt an Haltestellen durch Anschluss an ein Ladesystem, oder auch durch Rekuperation von Energie während Bremsvorgängen.

Im Folgenden wird zunächst davon ausgegangen, dass die beiden Batterieblöcke BAT1 und BAT2 sich nicht oder kaum voneinander unterscheiden. D.h. es handelt sich um Akkumulatoren des gleichen Typs, welche dementsprechend die gleiche Nennspannung haben, ferner ist ihr Alter bzw. ihr Gesundheitszustand (englisch: SoH, State of Health) und somit ihre Kapazität ähnlich.

Die Traktionsbatterien in Form der Batterieblöcke BAT1 und BAT2 werden nicht nur zum Antrieb eingesetzt; vielmehr sind Bestandteil des Fahrzeug-Traktionssystems der Figur 2 auch die Hilfsbetriebeverbraucher HBU. Bei diesen Zusatz- oder Hilfsbetriebeverbrauchern HBU kann es sich z.B. um Beleuchtungseinrichtungen, Klima/Heizungs-Anlagen, elektronische Systeme, Anlagen zur Kühlung von Komponenten, oder Komfortverbraucher wie Steckdosen handeln, also andere Verbraucher als der oder die Motoren zum Antrieb des Fahrzeugs. Die Gesamtheit an Hilfsbetriebeverbrauchern HBU ist in den Figuren in einem Kasten zusammengefasst, was bedeutet, dass einer oder mehrere derartige Verbraucher vorhanden sein können. Oft gibt es weniger Hilfsbetriebeverbraucher HBU als Batterieblöcke. Diese Hilfsbetriebeverbraucher HBU sollen direkt über die Batterieblöcke BAT1 und BAT2 versorgt werden, also nicht über die Wandler CONVERT1 und CONVERT2. Dies hat den Vorteil, dass die Hilfsbetriebeverbraucher HBU für den Niederspannungsbereich ausgelegt sein können, und nicht für das höhere Spannungsniveau des Motors M. Gemäß dem Stand der Technik sind die Hilfsbetriebeverbraucher HBU an nur einen Batterieblock BAT1 oder BAT2 angeschlossen. Figur 2 zeigt hierzu den Fall, dass die Hilfsbetriebeverbraucher HBU an den Batterieblock BAT2 angebunden sind und von ihm mit elektrischer Energie versorgt werden.

Da die Hilfsbetriebeverbraucher HBU an den Batterieblock BAT2 angeschlossen sind, wird dieser Batterieblock BAT2 stärker belastet als der andere Batterieblock BAT1 und dementsprechend stärker entladen. Dies bringt aufgrund der hierdurch auftretenden höheren Ströme verhältnismäßig hohe Verluste mit sich, denn die Verluste steigen annähernd quadratisch mit der Stromstärke. Das Auftreten der verhältnismäßig hohen Verluste gilt insbesondere wenn noch zusätzlich Leistung für das Fahren entnommen wird, also für Zeiten, in denen der Motor M mit elektrischer Energie versorgt wird. Deutlich wirken sich auch Zeiten des längeren Fahrzeugstillstands auf die Unsymmetrie hinsichtlich des Ladezustands (englisch: State of Charge, SoC) aus. Denn in diesen Phasen wird der Batterieblock BAT1 gar nicht belastet, während der Batterieblock BAT2 z.B. für die Klimatisierung und Beleuchtung des Fahrzeugs zuständig ist.

Das so entstehende Ungleichgewicht hinsichtlich der Ladezustände kann zwar beim Aufladen der Batterieblöcke BAT1 und BAT2 ausgeglichen werden, was jedoch Nachteile mit sich bringt: der stärker entladene Batterieblock BAT2 kann über seinen Wandler CONVERT2 mit höherer Ladeleistung aufgeladen werden, was jedoch aufgrund der hierdurch auftretenden höheren Ströme verhältnismäßig hohe Verluste mit sich bringt. Denn die Verluste steigen annähernd quadratisch mit der Stromstärke an, so dass sich eine Erhöhung des Ladestroms gravierend auswirkt. Alternativ kann der stärker entladene Batterieblock BAT2 mit gleicher Ladeleistung aufgeladen werden wie der andere Batterieblock BAT1; bis zum vollständigen Aufladen benötigt dies jedoch mehr Zeit als für den Batterieblock BAT1, was oftmals an der stark limitierten Zeitspanne scheitert, die für den Ladevorgang zur Verfügung steht. Denn Schienenfahrzeuge haben üblicherweise eine begrenzte Aufenthaltszeit in einem Bahnhof, wo die Aufladung der Batterieblöcke BAT1 und BAT2 erfolgen soll.

Zur Balancierung der Energien der Batterieblöcke BAT1 und BAT2 ist es auch möglich, von einem Batterieblock BAT1 zu dem anderen Batterieblock BAT2 umzuladen, was jedoch an beiden beteiligten Wandlern CONVERT1 und CONVERT2 Verluste hervorbringt. Denn durch das Umladen ist - im Gegensatz zum normalen Aufladevorgang - nicht nur einer der Wandler CONVERT1 oder CONVERT2 beteiligt, sondern beide, so dass zweifach Verluste in Kauf genommen werden müssen.

Man könnte versuchen, die Hilfsbetriebeverbraucher HBU auf den anderen Batterieblock BAT1 umzuschalten, wenn eine Unsymmetrie der Ladezustände zwischen den Batterieblöcken BAT1 und BAT2 entstanden ist. Dies wäre aber mit einer Unterbrechung der Versorgung verbunden, was kaum tolerierbar ist. Außerdem könnte hiermit nur diskontinuierlich die Entladung gemäß einer Stufen- oder Zweipunktregelung ausgeglichen werden.

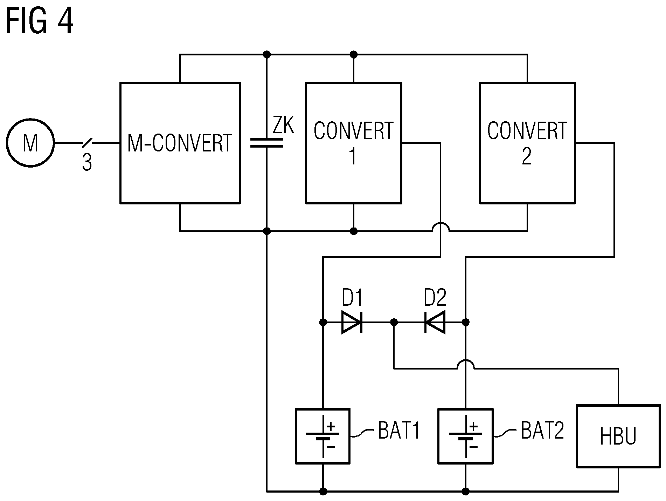

Die Figuren 3 und 4 zeigen einen Ausschnitt aus einem verbesserten Fahrzeug-Traktionssystem, bei welchem der ungünstige Zustand der unterschiedlichen Energieeinhalte der beiden Batterieblöcke BAT1 und BAT2 behoben wird. Es wird hierbei die Eigenschaft von Akkumulatoren ausgenutzt, dass gemäß ihrer Entladekurven die Batteriespannung zunächst langsam im Bereich der Nennspannung abfällt, bis die Entladeschlussspannung erreicht ist. Ein weiteres Entladen führt zu einem starken Spannungsabfall an der Batterie. Dementsprechend gilt für die beiden Batterieblöcke BAT1 und BAT2, dass der Batterieblock mit der höheren Spannung auch der höher geladene Batterieblock ist, d.h. den höheren Ladezustand und Energieinhalt aufweist. Mit anderen Worten bedeutet dies, dass die Leerlaufspannung der Batterieblöcke BAT1 und BAT2 zur Beurteilung ihres Ladezustandes herangezogen werden kann.

Im Traktionssystem der Figuren 3 und 4 werden die Hilfsbetriebeverbraucher HBU unverändert direkt über die Batterieblöcke BAT1 und BAT2 versorgt, also nicht über die Wandler CONVERT1 und CONVERT2. Im Unterschied zum System der Figur 2 wird durch zusätzliche Dioden D1 und D2 eine Speisung der Hilfsbetriebeverbraucher HBU durch beide Batterieblöcke BAT1 und BAT2 ermöglicht. Wenn die Spannung des Batterieblocks BAT1 höher als diejenige des Batterieblocks BAT2 ist, fließt der Strom durch die Diode D1 und die Diode D2 sperrt, so dass die Hilfsbetriebeverbraucher HBU vollständig von dem Batterieblock BAT1 versorgt werden. Umgekehrt befindet sich die Diode D1 in Sperrrichtung und die Diode D2 in Durchlassrichtung, wenn die Spannung des Batterieblocks BAT2 höher als diejenige des Batterieblocks BAT1 ist. In diesem Fall stammt die elektrische Energie für die Hilfsbetriebeverbraucher HBU von dem Batterieblock BAT2. Der Einsatz der Dioden D1 und D2 bewirkt also, dass der Batterie-block mit der höchsten Spannung die Last übernimmt. Die Energieentnahme der Hilfsbetriebeverbraucher HBU wird also physikalisch ohne zusätzliche Regelung und ohne Verluste durch die Wandler CONVERT1 und CONVERT2 auf die vorhandenen Quellen verteilt.

Wenn die beiden Batterieblöcke BAT1 und BAT2 sich auf dem gleichen Spannungsniveau befinden, fließt der Strom zu den Hilfsbetriebeverbrauchern HBU durch beide Dioden D1 und D2, es werden also beide Batterieblöcke BAT1 und BAT2 zu Versorgung der Hilfsbetriebeverbraucher HBU eingesetzt. Dies bedeutet, dass - gegebenenfalls nachdem ein Ausgleich der Ladezustände mittels der Dioden D1 und D2 geschaffen wurde - die meiste Zeit die Hilfsbetriebeverbraucher HBU-Last symmetrisch auf die mehreren speisenden Batterieblöcke BAT1 und BAT2 aufgeteilt ist. Dies entspricht einer symmetrischen Aufteilung der für die Versorgung der Hilfsbetriebeverbraucher HBU fließenden Ströme, was aufgrund der quadratischen Abhängigkeit der ohmschen Verluste von der Stromstärke zu einer Absenkung dieser Verluste führt. Diese symmetrische Speisung der Hilfsbetriebeverbraucher HBU findet so lange statt, bis eventuell erneut ein Ungleichgewicht hinsichtlich des Ladezustandes der Batterieblöcke BAT1 und BAT2 auftritt.

Bei unterschiedlichen Spannungen der beiden Batterieblöcke BAT1 und BAT2 wird also nur einer der Batterieblöcke BAT1 oder BAT2 zur Versorgung der Hilfsbetriebeverbraucher HBU verwendet, bei gleichen Spannungen hingegen beide symmetrisch. Ferner existiert im Übergangsbereich zwischen diesen beiden Situationen der Fall, dass sich die beiden Batterieblöcke BAT1 und BAT2 auf einem ungleichen, aber ähnlichen Spannungsniveau befinden. Auch in diesem Fall gilt, dass der Strom zu den Hilfsbetriebeverbrauchern HBU durch beide Dioden D1 und D2 fließt. Die Energieabgabe der beiden Batterieblöcke BAT1 und BAT2 lässt sich hierbei mittels der Maschenregel, dem 2. Kirchhoffschen Gesetz berechnen. Konkret bedeutet dies, dass der Strom sich auf die beiden Batterieblöcke BAT1 und BAT2 so aufteilt, dass die durch den Stromfluss hervorgerufenen Spannungsabfälle an den Batterieinnenwiderständen mit den ungleichen inneren Spannungen eine gemeinsame Spannung am Eingang des HBU bilden.

Dank Verwendung der Dioden D1 und D2 speisen die beiden Batterieblöcke BAT1 und BAT2 die Hilfsbetriebeverbraucher HBU gemeinsam. Dennoch sind sie entkoppelt, so dass keine Ausgleichsströme zwischen den beiden Batterieblöcken BAT1 und BAT2 fließen können. Dies wird besonders deutlich durch die Darstellungsweise der Figur 4. Diese zeigt die gleiche Schaltung wie die Figur 3. Man erkennt, dass aufgrund der gegensätzlichen bzw. antiparallelen Orientierung der beiden Dioden D1 und D2 ein Stromfluss in vertikaler Richtung, d.h. bei Leistungsabgabe von den Batterieblöcken BAT1 und BAT2 zu dem jeweiligen Wandler CONVERT1 bzw. CONVERT2 oder bei Leistungsaufnahme von den Wandlern CONVERT1 und CONVERT2 zu dem jeweiligen Batterieblock BAT1 und BAT2 ohne Beeinflussung des jeweils anderen Batterieblocks BAT1 oder BAT2 möglich ist. Hierdurch liegen aus Sicht des Verbrauchers zwei unabhängige Energiequellen bzw. -senken vor. Ferner ist wie beschrieben ein Stromfluss von den Batterieblöcken BAT1 und BAT2 zu den Hilfsbetriebeverbrauchern HBU möglich. Verhindert hingegen wird durch die Dioden D1 und D2 ein Stromfluss zwischen den Batterieblöcken BAT1 und BAT2. Solche Ausgleichsströme träten ansonsten bei nicht vorhandener Entkopplung durch die Dioden D1 und d2 zwischen den Batterieblöcken BAT1 und BAT2 bei ungleichem Ladezustand auf, was mit Verlusten verbunden wäre.

Die Diodenschaltung bewirkt ein Angleichen der Ladezustände unabhängig davon, wann und wie viel elektrische Energie von den Hilfsbetriebeverbrauchern HBU benötigt wird. Wie bereits erläutert, ist die Symmetrie hinsichtlich des Ladezustands der beiden Batterieblöcke BAT1 und BAT2 besonders für das Aufladen relevant. Insbesondere wird hierdurch eine Hochlast am jeweiligen Wandler CONVERT1 oder CONVERT2 vermieden, die andernfalls dadurch entstehen würde, dass ein Batterieblock BAT1 oder BAT2 mit gegenüber dem jeweils anderen Batterieblock BAT1 oder BAT2 höherer Leistung aufgeladen werden müsste. Diese Hochlast ließe sich zwar durch Verringerung der Ladeleistung vermeiden, so dass beide Batterieblöcke BAT1 und BAT2 mit der gleichen Leistung geladen werden, was sich aber nachteilig auf die Ladedauer auswirken würde; durch die tiefere Entladung einer der beiden Batterieblöcke BAT1 und BAT2 würde dieser eine längere Zeit benötigen, um wieder vollständig aufgeladen zu werden.

Von Vorteil ist das Angleichen der Ladezustände aufgrund folgender Überlegung:
Ein stark unterschiedlicher Ladezustand könnte auch dazu führen, dass nicht mehr beide Batterieblöcke BAT1 und BAT2 gleich für die Traktion herangezogen werden können. Dies kann sich einerseits nachteilig im Sinne einer reduzierten Antriebsleistung auswirken, und ferner werden durch eine unsymmetrische Belastung der Wandler CONVERT1 und CONVERT2 deren Verluste erhöht.

Eine Reduktion von Verlusten bei den Wandlern CONVERT1 und CONVERT2 kann insbesondere auch im Stillstand des Fahrzeugs realisiert werden. Bei reiner Hilfsbetriebeverbraucher HBU-Last, d.h. wenn keine Traktionsleistung über die Wandler CONVERT1 und CONVERT2 abgenommen wird, können die Batterieblöcke BAT1 und BAT2 mittels der Dioden D1 und D2 symmetrisch entladen werden. Hierdurch wird vermieden, dass die Wandler CONVERT1 und CONVERT2 Energie von Batterieblock zu Batterieblock umladen müssen, so dass sie zu Zeiten des Fahrzeugstillstands abgeschaltet werden können, was Leerlaufverluste einspart.

Ein weiterer Vorteil besteht darin, dass bei Ausfall eines Batterieblocks BAT1 oder BAT2 augenblicklich die Versorgung der Hilfsbetriebeverbraucher HBU über den jeweils anderen Batterieblock BAT1 oder BAT2 sichergestellt ist. Hierdurch ist die instantane Verfügbarkeit von elektrischer Energie für die Hilfsbetriebeverbraucher HBU und somit sowohl die Sicherheit als auch der Komfort des Fahrzeugs erhöht.

Bisher wurde die Situation betrachtet, dass die beiden Batterieblöcke BAT1 und BAT2 gleich alt sind, so dass sie sich gleich entladen. Altersunterschiede zwischen den Batterieblöcken BAT1 und BAT2 können demgegenüber eine Verschiebung ergeben: ältere Batterien haben eine reduzierte Kapazität und größere Innenwiderstände. Dies bedeutet, dass sie absolut gesehen weniger elektrische Energie speichern und abgeben können, und relativ gesehen ihr Ladezustand und somit ihr Spannungsniveau schneller absinkt. Insbesondere im Fall von Batterieblöcken mit unterschiedlichem Gesundheitszustand ist die Symmetrierung mittels der Dioden sinnvoll, denn dies bewirkt über die Spannungsangleichung ein Angleichen des relativen Energieinhalts der verschiedenen Batterieblöcke, d.h. des noch verbliebenen Energieeinhalts bezogen auf den maximal vom jeweiligen Batterieblock speicherbaren Energieinhalts. In diesem Fall der Batterieblöcke unterschiedlichen Gesundheitszustands wird die Situation, dass einer der beiden Batterieblöcke die Versorgung der Hilfsbetriebeverbraucher HBU übernimmt, öfter auftreten als im Fall der Batterieblöcke gleichen Gesundheitszustands, wo die paritätische Speisung der Regelfall ist.

Um den Zustand, in dem beide Batterieblöcke die Hilfsbetriebeverbraucher HBU aufgrund ihrer gleichen Spannung gemeinsam versorgen, schneller zu erreichen, kann dieses Ziel auch bei der Auf- oder Entladung der Batterieblöcke berücksichtigt werden. Wie oben erläutert, sind die Batterieblöcke durch die Dioden voneinander entkoppelt, so dass sie in vertikaler Richtung getrennt ansteuerbar sind. Die Leistungsaufnahme und -abgabe kann dementsprechend so eingestellt werden, dass ein Angleich des relativen Energieinhalts der verschiedenen Batterieblöcke angestrebt wird.

Die Erfindung wurde voranstehend an einem Ausführungsbeispiel beschrieben. Es versteht sich, dass zahlreiche Änderungen und Modifikationen möglich sind, ohne dass der Rahmen der Erfindung verlassen wird.

## Patentansprüche

1. Traktionssystem für ein Fahrzeug, umfassend zumindest einen ersten elektrischen Energiespeicher (BAT1) und einen zweiten elektrischen Energiespeicher (BAT2),
wobei der erste elektrische Energiespeicher (BAT1) und der zweite elektrische Energiespeicher (BAT2) über jeweils einen Gleichspannungswandler (CONVERT1, CONVERT2) an mindestens einen Motor (M) zum Antrieb des Fahrzeugs angeschlossen sind,
**dadurch gekennzeichnet, dass**
der erste elektrische Energiespeicher (BAT1) und der zweite elektrische Energiespeicher (BAT2) nicht über den jeweiligen Gleichspannungswandler (CONVERT1, CONVERT2) an zumindest einen weiteren Verbraucher (HBU) derart über Dioden (D1, D2) angeschlossen sind,
und der zumindest eine weitere Verbraucher (HBU) von dem elektrischen Energiespeicher (BAT1, BAT2) mit der höheren Spannung versorgt wird.

2. Traktionssystem nach Anspruch 1, bei dem
der erste elektrische Energiespeicher (BAT1) und der zweite elektrische Energiespeicher (BAT2) an den zumindest einen weiteren Verbraucher (HBU) derart über Dioden (D1, D2) angeschlossen sind,
dass
- der zumindest eine weitere Verbraucher (HBU) bei leicht unterschiedlichen Spannungen der elektrischen Energiespeicher (BAT1, BAT2) von beiden Energiespeichern (BAT1, BAT2) versorgt wird,
- der zumindest eine weitere Verbraucher (HBU) bei stärker unterschiedlichen Spannungen der elektrischen Energiespeicher (BAT1, BAT2) nur von dem elektrischen Energiespeicher (BAT1, BAT2) mit der höheren Spannung versorgt wird,
- der zumindest eine weitere Verbraucher (HBU) bei gleichen Spannungen der elektrischen Energiespeicher (BAT1, BAT2) von beiden Energiespeichern (BAT1, BAT2) in gleichem Ausmaß versorgt wird.

3. Traktionssystem nach Anspruch 1 oder 2, bei dem
der erste elektrische Energiespeicher (BAT1) und der zweite elektrische Energiespeicher (BAT2) an den zumindest einen weiteren Verbraucher (HBU) derart über Dioden (D1, D2) angeschlossen sind,
dass kein Stromfluss zwischen den elektrischen Energiespeichern (BAT1, BAT2) möglich ist.

4. Traktionssystem nach einem der Ansprüche 1 bis 3, bei dem
der erste elektrische Energiespeicher (BAT1) und der zweite elektrische Energiespeicher (BAT2) an den zumindest einen weiteren Verbraucher (HBU) angeschlossen sind, indem
in einer ersten Masche der erste elektrische Energiespeicher (BAT1), eine erste Diode (D1) und der zumindest eine weitere Verbraucher (HBU) angeordnet sind, und in einer zweiten Masche der zweite elektrische Energiespeicher (BAT2), eine zweite Diode (D2) und der zumindest eine weitere Verbraucher (HBU) angeordnet sind.

5. Traktionssystem nach einem der Ansprüche 1 bis 4, bei dem
der erste elektrische Energiespeicher (BAT1) und der zweite elektrische Energiespeicher (BAT2) an den mindestens einen Motor (M) über den jeweils einen Gleichspannungswandler (CONVERT1, CONVERT2) und mindestens einen Gleichstromzwischenkreis (ZK) angeschlossen sind, wobei die Spannung der elektrischen Energiespeicher (BAT1, BAT2) im Niederspannungsbereich und die Spannung des mindestens einen Gleichstromzwischenkreises (ZK) im Mittelspannungsbereich liegt.

6. Verfahren zum Betreiben eines Traktionssystems für ein Fahrzeug mit zumindest einem ersten elektrischen Energiespeicher (BAT1) und einem zweiten elektrischen Energiespeicher (BAT2), bei dem
zumindest ein Motor (M) zum Antrieb des Fahrzeugs über jeweils einen Gleichspannungswandler (CONVERT1, CONVERT2) gleichzeitig von dem ersten elektrischen Energiespeicher (BAT1) und dem zweiten elektrischen Energiespeicher (BAT2) versorgt wird,
**dadurch gekennzeichnet, dass**
der erste elektrische Energiespeicher (BAT1) und der zweite elektrische Energiespeicher (BAT2) nicht über den jeweiligen Gleichspannungswandler (CONVERT1, CONVERT2) an zumindest einen weiteren Verbraucher (HBU) derart über Dioden (D1, D2) angeschlossen sind, dass der zumindest eine weitere Verbraucher (HBU) von dem elektrischen Energiespeicher (BAT1, BAT2) mit der höheren Spannung versorgt wird.

7. Verfahren nach Anspruch 6, bei dem
eine Energieabgabe der elektrischen Energiespeicher (BAT1, BAT2) an den zumindest einen Motor (M) und ein Aufladen der elektrischen Energiespeicher (BAT1, BAT2) über den jeweiligen Gleichspannungswandler (CONVERT1, CONVERT2) erfolgt, und
die Energieabgabe und das Aufladen der elektrischen Energiespeicher (BAT1, BAT2) über die Gleichspannungswandler (CONVERT1, CONVERT2) so gesteuert wird, dass die elektrischen Energiespeicher (BAT1, BAT2) die gleiche Spannung aufweisen.

8. Fahrzeug, insbesondere Schienenfahrzeug, mit einem Traktionssystem nach einem der Ansprüche 1 bis 5.

## Claims

1. Traction system for a vehicle, comprising at least a first electrical energy storage device (BAT1) and a second electrical energy storage device (BAT2),
wherein the first electrical energy storage device (BAT1) and the second electrical energy storage device (BAT2) are each connected via a DC/DC converter (CONVERT1, CONVERT2) to at least one motor (M) for driving the vehicle,
**characterized in that**
the first electrical energy storage device (BAT1) and the second electrical energy storage device (BAT2) are not connected via the respective DC/DC converter (CONVERT1, CONVERT2) to at least one additional consumer (HBU) via diodes (D1, D2) in such a way, and the at least one additional consumer (HBU) is supplied by the electrical energy storage device (BAT1, BAT2) with the higher voltage.

2. Traction system according to Claim 1, in which
the first electrical energy storage device (BAT1) and the second electrical energy storage device (BAT2) are connected to the at least one additional consumer (HBU) via diodes (D1, D2) in such a way
that
- the at least one additional consumer (HBU) is supplied by both energy storage devices (BAT1, BAT2) in the case of slightly different voltages of the electrical energy storage devices (BAT1, BAT2),
- the at least one additional consumer (HBU) is supplied only by the electrical energy storage device (BAT1, BAT2) with the higher voltage in the case of significantly different voltages of the electrical energy storage devices (BAT1, BAT2),
- the at least one additional consumer (HBU) is supplied by both energy storage devices (BAT1, BAT2) to the same extent in the case of equal voltages of the electrical energy storage devices (BAT1, BAT2).

3. Traction system according to Claim 1 or 2, in which
the first electrical energy storage device (BAT1) and the second electrical energy storage device (BAT2) are connected to the at least one additional consumer (HBU) via diodes (D1, D2) in such a way
that no current flow is possible between the electrical energy storage devices (BAT1, BAT2).

4. Traction system according to any of Claims 1 to 3, in which the first electrical energy storage device (BAT1) and the second electrical energy storage device (BAT2) are connected to the at least one additional consumer (HBU) by virtue of
the first electrical energy storage device (BAT1), a first diode (D1) and the at least one additional consumer (HBU) being arranged in a first mesh, and
the second electrical energy storage device (BAT2), a second diode (D2) and the at least one additional consumer (HBU) being arranged in a second mesh.

5. Traction system according to any of Claims 1 to 4, in which the first electrical energy storage device (BAT1) and the second electrical energy storage device (BAT2) are connected to the at least one motor (M) via the respective one DC/DC converter (CONVERT1, CONVERT2) and at least one DC link (ZK), wherein the voltage of the electrical energy storage devices (BAT1, BAT2) is in the low-voltage range and the voltage of the at least one DC link (ZK) is in the medium-voltage range.

6. Method for operating a traction system for a vehicle having at least a first electrical energy storage device (BAT1) and a second electrical energy storage device (BAT2), in which method at least one motor (M)for driving the vehicle is supplied simultaneously by the first electrical energy storage device (BAT1) and the second electrical energy storage device (BAT2) via in each case one DC/DC converter (CONVERT1, CONVERT2), **characterized in that**
the first electrical energy storage device (BAT1) and the second electrical energy storage device (BAT2) are not connected via the respective DC/DC converter (CONVERT1, CONVERT2) to at least one additional consumer (HBU) via diodes (D1, D2) in such a way that the at least one additional consumer (HBU) is supplied by the electrical energy storage device (BAT1, BAT2) with the higher voltage.

7. Method according to Claim 6, in which
energy is output by the electrical energy storage devices (BAT1, BAT2) to the at least one motor (M) and the electrical energy storage devices (BAT1, BAT2) are charged via the respective DC/DC converter (CONVERT1, CONVERT2), and
the energy output and the charging of the electrical energy storage devices (BAT1, BAT2) via the DC/DC converters (CONVERT1, CONVERT2) is controlled such that the electrical energy storage devices (BAT1, BAT2) have the same voltage.

8. Vehicle, in particular a rail vehicle, having a traction system according to any of Claims 1 to 5.

## Revendications

1. Système de traction pour un véhicule, comprenant au moins un premier accumulateur d'énergie électrique (BAT1) et un second accumulateur d'énergie électrique (BAT2),
dans lequel le premier accumulateur d'énergie électrique (BAT1) et le second accumulateur d'énergie électrique (BAT2) sont raccordés par le biais respectivement d'un convertisseur de tension continue (CONVERT1, CONVERT2) à au moins un moteur (M) destiné à l'entraînement du véhicule, **caractérisé en ce que**
le premier accumulateur d'énergie (BAT1) et le second accumulateur d'énergie (BAT2) ne sont pas raccordés par le biais du convertisseur de tension continue (CONVERT1, CONVERT2) respectif à au moins un consommateur supplémentaire (HBU) par le biais de diodes (D1, D2),
et l'au moins un consommateur supplémentaire (HBU) est approvisionné avec la tension plus élevée par l'accumulateur d'énergie électrique (BAT1, BAT2).

2. Système de traction selon la revendication 1, dans lequel le premier accumulateur d'énergie électrique (BAT1) et le second accumulateur d'énergie électrique (BAT2) sont raccordés à l'au moins un consommateur supplémentaire (HBU) par le biais de diodes (D1, D2) de telle sorte que
- l'au moins un consommateur supplémentaire (HBU) est approvisionné en présence de tensions légèrement différentes des accumulateurs d'énergie électrique (BAT1, BAT2) par les deux accumulateurs d'énergie (BAT1, BAT2),
- l'au moins un consommateur supplémentaire (HBU) est approvisionné en présence de tensions fortement différentes des accumulateurs d'énergie électrique (BAT1, BAT2) uniquement par l'accumulateur d'énergie électrique (BAT1, BAT2) avec la tension plus élevée,
- l'au moins un consommateur supplémentaire (HBU) est approvisionné en présence de tensions égales des accumulateurs d'énergie électrique (BAT1, BAT2) par les deux accumulateurs d'énergie (BAT1, BAT2) dans la même mesure.

3. Système de traction selon la revendication 1 ou 2, dans lequel le premier accumulateur d'énergie électrique (BAT1) et le second accumulateur d'énergie électrique (BAT2) sont raccordés à l'au moins un consommateur supplémentaire (HBU) par le biais de diodes (D1, D2) de telle sorte qu'aucun débit de courant entre les accumulateurs d'énergie électrique (BAT1, BAT2) n'est possible.

4. Système de traction selon l'une quelconque des revendications 1 à 3, dans lequel
le premier accumulateur d'énergie électrique (BAT1) et le second accumulateur d'énergie électrique (BAT2) sont raccordés à l'au moins un consommateur supplémentaire (HBU), en ce que l'accumulateur d'énergie électrique (BAT1), une première diode (D1) et l'au moins un consommateur supplémentaire (HBU) sont disposés dans un premier maillage et le second accumulateur d'énergie électrique (BAT2), une seconde diode (D2) et l'au moins un consommateur supplémentaire (HBU) sont disposés dans un second maillage.

5. Système de traction selon l'une quelconque des revendications 1 à 4, dans lequel
le premier accumulateur d'énergie électrique (BAT1) et le second accumulateur d'énergie électrique (BAT2) sont raccordés à l'au moins un moteur (M) par le biais respectivement d'un convertisseur de tension continue (CONVERT1, CONVERT2) et d'au moins un circuit intermédiaire à courant continu (ZK), dans lequel la tension des accumulateurs d'énergie électrique (BAT1, BAT2) dans la plage de basses tensions et la tension de l'au moins un circuit intermédiaire à courant continu (ZK) se trouve dans la plage de moyenne tension.

6. Procédé destiné à l'exploitation d'un système de traction pour un véhicule avec au moins un premier accumulateur d'énergie électrique (BAT1) et un second accumulateur d'énergie électrique (BAT2), dans lequel
au moins un moteur (M) destiné à l'entraînement du véhicule est approvisionné par le biais respectivement d'un convertisseur de tension continue (CONVERT1, CONVERT2) en même temps par le premier accumulateur d'énergie électrique (BAT1) et le second accumulateur d'énergie électrique (BAT2),
**caractérisé en ce que**
le premier accumulateur d'énergie électrique (BAT1) et le second accumulateur d'énergie électrique (BAT2) ne sont pas raccordés par le biais du convertisseur de tension continue (CONVERT1, CONVERT2) respectif à l'au moins un consommateur supplémentaire (HBU) par le biais de diodes (D1, D2), de telle sorte que l'au moins un consommateur supplémentaire (HBU) est approvisionné par l'accumulateur d'énergie électrique (BAT1, BAT2) avec la tension plus élevée.

7. Procédé selon la revendication 6, dans lequel une décharge d'énergie de l'accumulateur d'énergie électrique (BAT1, BAT2) s'applique à l'au moins un moteur (M) et un rechargement des accumulateurs d'énergie électrique (BAT1, BAT2) est effectué par le biais du convertisseur de tension continue (CONVERT1, CONVERT2) respectif, et
la décharge d'énergie et le rechargement des accumulateurs d'énergie électrique (BAT1, BAT2) sont commandés par le biais des convertisseurs de tension continue (CONVERT1, CONVERT2) de sorte que les accumulateurs d'énergie électrique (BAT1, BAT2) présentent la même tension.

8. Véhicule, en particulier véhicule sur rails, avec un système de traction selon l'une quelconque des revendications 1 à 5.
